# FASCICULE DE BREVET EUROPEEN

(11) **EP 2 282 920 B1**
(45) Date de publication et mention de la délivrance du brevet: **14.09.2011**
(21) Numéro de dépôt: 08805798.9
(22) Date de dépôt: 16.05.2008
(51) Int. Cl.: B62D 1/184

(54) **DISPOSITIF D'AJUSTEMENT DE POSITION D'UNE COLONNE DE DIRECTION DE VEHICULE AUTOMOBILE**
VORRICHTUNG ZUR EINSTELLUNG DER POSITION EINER LENKSÄULE IN EINEM KRAFTFAHRZEUG
DEVICE FOR ADJUSTING THE POSITION OF A STEERING COLUMN IN AN AUTOMOBILE

(43) Date de publication de la demande: 16.02.2011
(73) Titulaire: ZF Systemes de Direction Nacam, S.A.S., 41100 Vendome (FR)
(72) Inventeur: FEVRE, Laurent, F-41000 Saint Sulpice De Pommeray (FR)
(74) Mandataire: Bloch & Bonnétat
(86) Numéro de dépôt international: PCT/FR2008/050852
(87) Numéro de publication internationale: WO 2009/138578

(56) Documents cités:
- EP-A- 1 359 082

## Description

La présente invention se rapporte à un dispositif d'ajustement de position d'une colonne de direction réglable d'un véhicule automobile selon le préambule de la revendication 1 connu du document EP.A.0836981. Le dispositif selon l'invention s'applique à une colonne de direction réglable en profondeur ou en inclinaison ou bien à une colonne de direction réglable en profondeur et en inclinaison. La colonne de direction comporte un arbre de direction, qui est monté dans un tube-corps et qui porte le volant de direction ; ledit tube-corps étant supporté et bloqué sur la structure du véhicule à la position voulue.

Les différents types connus de colonne de direction réglables en position comportent un système de serrage avec deux positions : une position verrouillée et une position déverrouillée. En position verrouillée, la colonne de direction est bloquée en position, et en position déverrouillée, la colonne de direction est débloquée afin de pouvoir effectuer le réglage de position demandé de ladite colonne.

En position déverrouillée, il faut qu'il y ait un jeu de fonctionnement suffisant pour permettre le coulissement correct de la colonne de direction par rapport à la structure du véhicule. Les colonnes de direction connues présentent alors l'un des deux types d'inconvénients ci-après : soit le jeu de fonctionnement est trop faible, et les manoeuvres de réglage du volant de direction sont difficiles à exécuter par le conducteur ; soit le jeu de fonctionnement est trop grand, et il se produit un basculement apparent du volant de direction, qui est mal ressenti et préoccupant pour le conducteur.

Le but de la présente invention est de proposer un dispositif d'ajustement de position d'une colonne de direction réglable d'un véhicule automobile qui évite les inconvénients décrits ci-dessus. Le dispositif d'ajustement selon l'invention devra permettre d'obtenir un jeu de fonctionnement maîtrisé entre la colonne de direction et la structure du véhicule lors du réglage, tout en donnant toute garantie sur le maintien en position, lorsque le système de serrage de la colonne est en position verrouillée, comme cela a fait l'objet du document EP. A - 1359082 du nom de la demanderesse NACAM.

De plus, le dispositif d'ajustement de position devra s'intégrer facilement dans l'encombrement des colonnes de direction existantes.

L'invention se rapporte à un dispositif d'ajustement de position d'une colonne de direction de véhicule automobile, qui est constituée par un arbre de direction monté tournant autour d'un axe de direction dans un tube-corps. Ledit tube-corps est relié à un ensemble support fixé à la structure du véhicule. Ladite colonne de direction est réglable en hauteur et/ou en profondeur, avec un système de serrage suivant un axe de serrage, qui est sensiblement perpendiculaire au plan vertical passant par l'axe de direction.

L'ensemble des liaisons entre ledit tube-corps et l'ensemble support est constitué par un mécanisme latéral, par rapport au plan vertical de l'axe de direction, qui est monté sur un montant latéral de l'ensemble support. Ledit mécanisme latéral comprend un système anti-rotation suivant l'axe de serrage, et un système anti-rotation suivant l'axe de direction. Les deux systèmes anti-rotation permettent d'obtenir une liaison de type encastrement entre le tube-corps et le montant latéral de l'ensemble support, lorsque le système de serrage est en position verrouillée.

Le mécanisme latéral comprend également un système de réglage du jeu de coulissement suivant l'axe de direction entre le mécanisme latéral et le tube-corps de manière à éviter tout basculement apparent, lorsque le système de serrage est en position déverrouillée ; ledit système de réglage du jeu étant intégré audit système de serrage, et étant commandé par le système de serrage.

Avantageusement selon l'invention, le système anti-rotation suivant l'axe de serrage et le système anti-rotation suivant l'axe de direction sont un seul et même système anti-rotation qui consiste en un élément d'appui coopérant avec le tube-corps. Ledit élément d'appui a un profil transversal par rapport à l'axe de direction qui coopère avec un profil conjugué qui est aménagé sur ledit tube-corps, l'élément d'appui étant disposé entre le tube-corps et le montant latéral, et l'élément d'appui étant relié audit montant latéral.

Dans cette configuration de l'invention, une réalisation particulièrement intéressante consiste en ce que l'élément d'appui comporte deux faces d'appui qui sont inclinées l'une par rapport à l'autre, qui sont parallèles à l'axe de direction, et qui sont disposées d'un côté d'un plan de serrage passant l'axe de serrage et perpendiculaire au plan vertical de l'axe de direction. Lesdites faces d'appui coopèrent respectivement avec deux faces de contact ayant un profil conjugué, qui sont aménagées sur le tube-corps, lesdites faces de contact ayant la même inclinaison par rapport au plan vertical de l'axe de direction que lesdites faces d'appui, et étant parallèles audit axe de direction.

Selon un mode de réalisation de l'invention, le système de serrage comprend :
- une tige de serrage dont l'axe est l'axe de serrage, tous les autres éléments du système de serrage sont montés sur ladite tige de serrage qui traverse le tube-corps, l'élément d'appui, le montant latéral ainsi que tous les autres éléments ;
- un ensemble de blocage, qui est disposé contre la face externe du montant latéral ;
- un système de manoeuvre entraînant en rotation l'ensemble de blocage par rapport à l'axe de serrage;
- une équerre de serrage, qui est aménagée à l'extrémité interne de la tige de serrage afin de constituer une tête de serrage, qui vient s'appliquer contre la face interne du tube-corps ;
- un élément de serrage, qui est aménagé à l'extrémité externe de la tige de serrage de manière à bloquer, dans le sens de l'axe de serrage, le tube-corps sur le montant latéral, lorsque le système de serrage est en position verrouillée.

Selon l'invention, le système de réglage du jeu de coulissement coopère avec l'ensemble de blocage, ce qui permet d'utiliser l'encombrement du système de serrage.

Dans cette réalisation :
- l'ensemble de blocage comprend une came fixe en rotation par rapport à l'axe de serrage, et une came mobile en rotation par rapport à l'axe de serrage et solidaire du levier de manoeuvre, ou des aiguilles à bouts sphériques s'appuyant entre un plateau fixe et un plateau mobile ;
- le système de réglage du jeu de coulissement comprend un élément de réglage monté sur la tige de serrage, ledit élément de réglage étant manoeuvrable afin d'ajuster sa position axiale par rapport au montant latéral, de manière qu'en position déverrouillée du système de serrage, il y ait le jeu demandé entre chacune des deux faces d'appui de l'élément d'appui et la face de contact correspondante du tube-corps.

Dans cette structure de l'invention :
- le tube-corps comporte un élément latéral constitué par deux portions inclinées et une portion de raccordement sensiblement verticale, chaque portion inclinée comporte une face externe qui est la face de contact correspondante, et la portion de raccordement est munie d'un trou oblong de passage de la tige de serrage, qui est parallèle à l'axe de direction ;
- l'élément d'appui comporte deux portions d'appui sensiblement verticales qui s'appliquent contre le montant latéral, et deux portions inclinées qui comportent une face interne qui est la face d'appui correspondante, l'élément d'appui ayant un trou de passage de la tige de serrage ;
- le montant latéral comporte un trou oblong de passage de la tige de serrage, qui est sensiblement perpendiculaire au plan de serrage ;
- l'équerre de serrage constituant la tête de serrage possède deux faces inclinées, qui s'appliquent contre les faces internes des portions inclinées correspondantes du tube-corps pour permettre le blocage en position verrouillée.

Dans cette structure de l'invention :
- la tige de serrage comporte un anneau intégré qui constitue l'élément de réglage ;
- la tige de serrage a une extrémité interne filetée qui reçoit un écrou constituant la tête de serrage ;
- la tige de serrage a une extrémité externe filetée avec une forme de manoeuvre agencée au bout de ladite extrémité, ladite forme permettant le réglage de la tête de serrage par rapport audit anneau en position déverrouillée,
- l'extrémité externe filetée reçoit l'élément de serrage qui est constitué par un écrou de serrage bloqué en position verrouillée.

Le dispositif d'ajustement en position d'une colonne de direction selon l'invention présente ainsi l'avantage d'éviter tout phénomène de basculement apparent du volant de direction, lorsque le système de serrage est en position déverrouillée. Le dispositif de l'invention présente également l'avantage d'avoir une liaison de type encastrement entre le tube-corps et le montant latéral de l'ensemble support lié à la structure du véhicule, lorsque le système de serrage est en position verrouillée. De plus, le système de réglage du jeu de coulissement coopère avec l'ensemble de blocage, en utilisant l'encombrement du système de serrage, ce qui offre l'avantage d'éviter tout encombrement supplémentaire.

D'autres caractéristiques et avantages de la présente invention apparaîtront plus clairement à la lecture de la description suivante de plusieurs réalisations préférées de l'invention en référence aux dessins annexés correspondants dans lesquels :
- la figure 1 est une vue en perspective du dispositif d'ajustement en position d'une colonne de direction selon l'invention ;
- la figure 2 est une vue analogue à la figure 1 d'un autre mode de réalisation de l'invention ;
- la figure 3 est une vue en coupe transversale passant par l'axe de serrage de la figure 1 en position verrouillée;
- la figure 4 est une coupe analogue à la figure 3 en position déverrouillée ;
- la figure 5 est une vue de détail de la figure 3 ;
- la figure 6 est une vue de détail de la figure 4 ;
- la figure 7 est une vue analogue à la figure 3 en position verrouillée d'une autre réalisation ;
- la figure 8 est une vue analogue à la figure 7 en position déverrouillée.
- la figure 9 est une vue en coupe transversale passant par l'axe de serrage de la figure 2 en position verrouillée ;
- la figure 10 est une vue analogue à la figure 9 en position déverrouillée.

Comme on peut le voir sur les figures l'invention se rapporte à un dispositif d'ajustement de position d'une colonne de direction réglable d'un véhicule automobile. La colonne de direction comprend un arbre de direction 1, qui est monté tournant autour d'un axe de direction 3. L'arbre de direction 1 est monté tournant dans un tube-corps 2. Ledit tube-corps 2 est disposé entre deux montants latéraux 11 et 12, qui sont reliés par un élément de raccordement 13. Les deux montants latéraux 11, 12 et l'élément de raccordement 13 constituent un élément support, qui fait partie d'un ensemble support 6. L'ensemble support 6 est fixé à la structure du véhicule. La colonne de direction est réglable en inclinaison ou en profondeur, ou en inclinaison et en profondeur.

Le tube-corps 2 est relié à l'ensemble support 6 par un système de réglage en position en hauteur ou en profondeur ou en hauteur et en profondeur.

La colonne de direction comporte un système de serrage 4, qui permet d'avoir la position verrouillée et la position déverrouillée de ladite colonne de direction.

Le système de serrage 4 est disposé et agit suivant un axe de serrage 5, qui est sensiblement perpendiculaire au plan vertical 8 passant par l'axe de direction 3.

Les deux montants latéraux 11 et 12 de l'ensemble support 6 sont sensiblement verticaux, c'est-à-dire qu'ils sont sensiblement parallèles au plan vertical 8 passant par l'axe de direction 3.

Dans la suite de la description et pour un même élément, on appellera interne ou intérieur par rapport à l'axe de direction 3 ou par rapport au plan vertical 8, ce qui est le plus près de cet axe de direction 3 ou de ce plan vertical 8, et externe ou extérieur ce qui est le plus éloigné.

Ainsi, le montant latéral 11 a une face interne 15 et une face externe 17 par rapport à l'axe de direction 3, ou par rapport au plan vertical 8. La face interne 15 et la face externe 17 sont sensiblement parallèles au plan vertical 8.

De plus, le montant 11 possède un trou oblong 19 qui est orienté dans le sens du réglage en hauteur du système de réglage en position.

Le dispositif de réglage en position est bloqué à la position choisie par le système de serrage 4. L'axe de serrage 5 est également sensiblement perpendiculaire au montant latéral 11 de l'ensemble support 6. Le dispositif de serrage a deux positions : une position déverrouillée dans laquelle le dispositif de serrage est débloqué pour permettre le réglage demandé de la colonne de direction, et une position verrouillée dans laquelle le dispositif de serrage est bloqué pour garantir le maintien de la position choisie.

Dans les modes de réalisation de l'invention représentés sur les différentes figures, l'axe de serrage 5 traverse le tube-corps 2 au voisinage de l'axe de direction 3. Le plan, passant par l'axe de serrage 5 et l'axe de direction 3, est appelé plan de serrage 9 ; ce plan de serrage 9 est sensiblement perpendiculaire au plan vertical 8.

Comme on peut le voir sur les figures l'ensemble des liaisons entre ledit tube-corps 2 et l'ensemble support 6 est constitué par un mécanisme latéral 7 par rapport au plan vertical 8 de l'axe de direction 3, c'est-à-dire qu'il est disposé entièrement d'un seul côté du plan vertical 8.

Le mécanisme latéral 7 est ainsi monté sur le montant latéral 11 de l'ensemble support 6.

Selon l'invention, le mécanisme latéral 7 comprend des systèmes anti-rotation afin d'assurer le blocage en position verrouillée, et un système de réglage du jeu de coulissement en position déverrouillée.

Un système anti-rotation est agencé suivant l'axe de serrage 4, et un système anti-rotation est agencé suivant l'axe de direction 3. Les deux systèmes anti-rotation permettent d'obtenir une liaison de type encastrement entre le tube-corps 2 et le montant latéral 11 de l'ensemble support 6, lorsque le système de serrage 4 est en position verrouillée.

Le système de réglage du jeu de coulissement est réalisé suivant l'axe de direction 3 entre le mécanisme latéral 7 et le tube-corps 2 de manière à éviter tout basculement apparent, lorsque le système de serrage 4 est en position déverrouillée. De plus, le système de réglage du jeu est intégré audit système de serrage 4, par l'intermédiaire d'une tige de serrage 160 qui commande ledit système de réglage du jeu de coulissement.

Le système anti-rotation suivant l'axe de serrage 5 et le système anti-rotation suivant l'axe de direction 3 sont un seul et même système anti-rotation. Ledit système anti-rotation unique est constitué par un élément d'appui 40 qui coopère avec le tube-corps 2. Cet élément d'appui 40 a un profil transversal par rapport à l'axe de direction 3 qui coopère avec un profil conjugué qui est aménagé sur ledit tube-corps 2. L'élément d'appui 40 est disposé entre le tube-corps 2 et la face interne 15 du montant latéral 11. De plus, l'élément d'appui 40 est relié audit montant latéral 11.

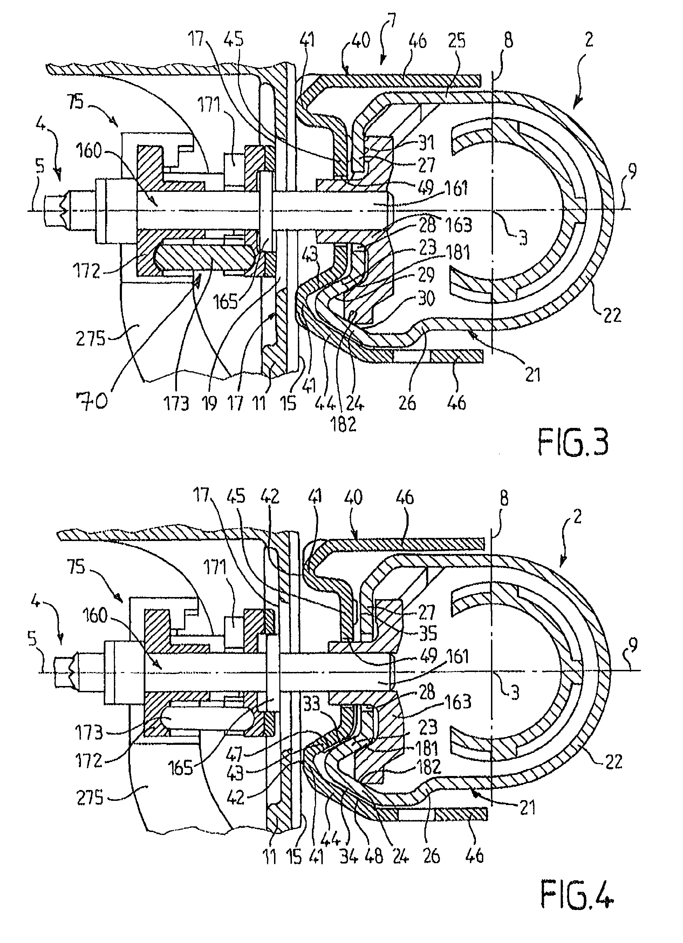

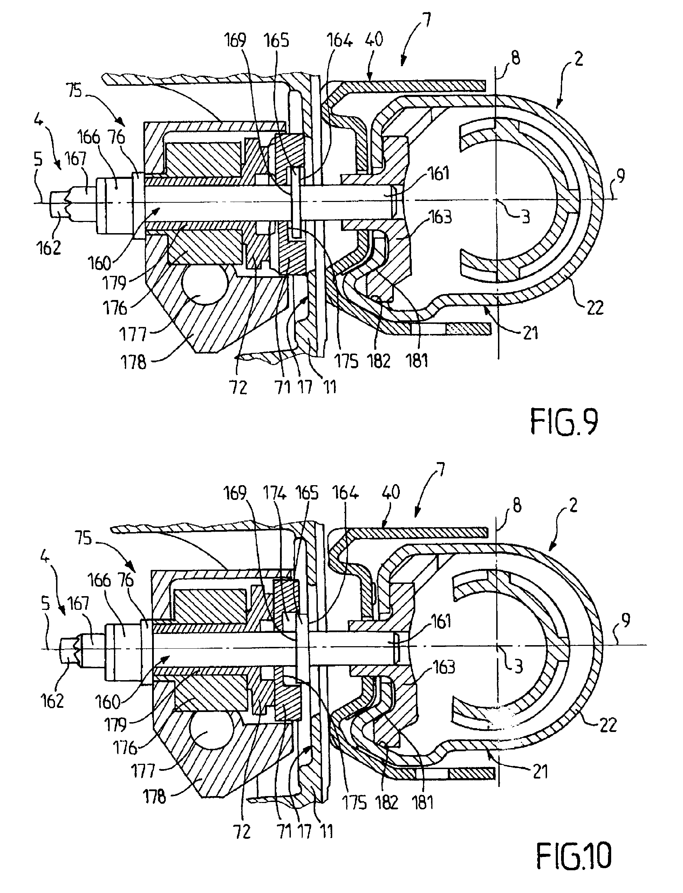

Comme cela est représenté sur les figures 3, 4, 7 à 10, le tube-corps 2 comporte un élément latéral 21 et un élément latéral 22, qui sont disposés approximativement de part et d'autre du plan vertical 8.

Dans un plan transversal par rapport à l'axe de direction 3, l'élément latéral 22 a une forme sensiblement demi-circulaire, et l'élément latéral 21 a une forme constituée de plusieurs parties droites. L'élément latéral 21 comporte deux portions inclinées 23 et 24 disposées d'un côté du plan de serrage 9, et une portion de raccordement 27 sensiblement verticale reliée à la portion 23. Les deux portions inclinées 23 et 24 sont disposées symétriquement par rapport à un plan parallèle au plan de serrage 9. Chaque portion inclinée 24 et de raccordement 27 se prolonge respectivement par une portion d'extrémité 26 et 25 qui se raccorde à l'élément latéral 22 par un élément perpendiculaire au plan vertical 8.

La portion de raccordement 27 est munie d'un trou oblong de passage 28 du système de serrage 4, qui est parallèle à l'axe de direction 3, ce qui permet le réglage en profondeur du système de réglage en position. La portion inclinée 23 a une face interne 29 et une face externe de contact 33, qui sont parallèles à l'axe de direction 3. La portion inclinée 24 a une face interne 30 et une face externe de contact 34, qui sont également parallèles à l'axe de direction 3. La portion de raccordement 27 a une face interne 31 et une face externe 35, qui sont aussi parallèles à l'axe de direction 3.

L'élément d'appui 40 comporte deux portions d'appui 41 sensiblement verticales disposées de part et d'autre du plan de serrage 9. Une des portions d'appui 41 comporte deux portions inclinées 43 et 44 disposées symétriquement par rapport à un plan parallèle au plan de serrage 9. La portion inclinée 43 est reliée à l'autre portion d'appui 41 par une portion de raccordement 45 sensiblement verticale, la portion inclinée 44 et l'autre portion d'appui 41 se prolonge respectivement par une portion d'extrémité 46 sensiblement perpendiculaire au plan verticale 8. La portion de raccordement 45 est munie d'un trou de passage 49 du système de serrage.

La portion d'appui 41 est munie d'un trou de passage 49 du système de serrage 4. Chaque portion d'appui 41 a une face externe 42, sensiblement verticale, qui s'applique contre la face interne 15 du montant latéral 11. La portion inclinée 43 a une face interne d'appui 47, qui est parallèle à l'axe de direction 3. La portion inclinée 44 a une face interne d'appui 48, qui est parallèle à l'axe de direction 3.

Le système de serrage 4 permet de monter le tube-corps 2 contre l'élément d'appui 40 qui s'applique contre le montant latéral 11. La face externe de contact 33 et la face interne d'appui 47 sont disposées avec le même inclinaison par rapport au plan de serrage 9, ainsi que la face externe de contact 34 et la face interne d'appui 48 qui leur sont symétriques par rapport au plan parallèle du plan de serrage 9.

Ainsi, l'élément d'appui 40 comporte deux faces internes d'appui 47, 48 qui sont inclinées l'une par rapport à l'autre, qui sont parallèles à l'axe de direction 3, et qui sont disposées de part et d'autre d'un plan parallèle au plan de serrage 9 passant l'axe de serrage 5 et l'axe de direction 3 et perpendiculaire au plan vertical 8 de l'axe de direction 3. Lesdites faces internes d'appui 47, 48 coopèrent respectivement avec deux faces externes de contact 33, 34 ayant un profil conjugué, qui sont aménagées sur le tube-corps 2, lesdites faces externes de contact 33, 34 ont la même inclinaison par rapport au plan vertical 8 de l'axe de direction 3 que lesdites faces internes d'appui 47, 48, et sont parallèles audit axe de direction 3.

Cette architecture du dispositif de l'invention permet aux faces externes de contact 33 et 34 du tube-corps 2 de venir s'appliquer parfaitement contre les faces internes d'appui 47 et 48 de l'élément d'appui 40, lorsque le système de serrage est en position bloquée. Du fait que ces différentes faces sont droites et inclinées par rapport à un plan parallèle au plan de serrage 9, elles empêchent toute rotation du tube-corps 2 par rapport à l'axe de serrage 5 et par rapport à l'axe de direction 3.

De plus le système anti-rotation est complété par les portions de raccordement 27 et 45 qui s'appliquent l'une contre l'autre en position verrouillée, de l'autre côté des portions inclinées par rapport au plan de serrage 9.

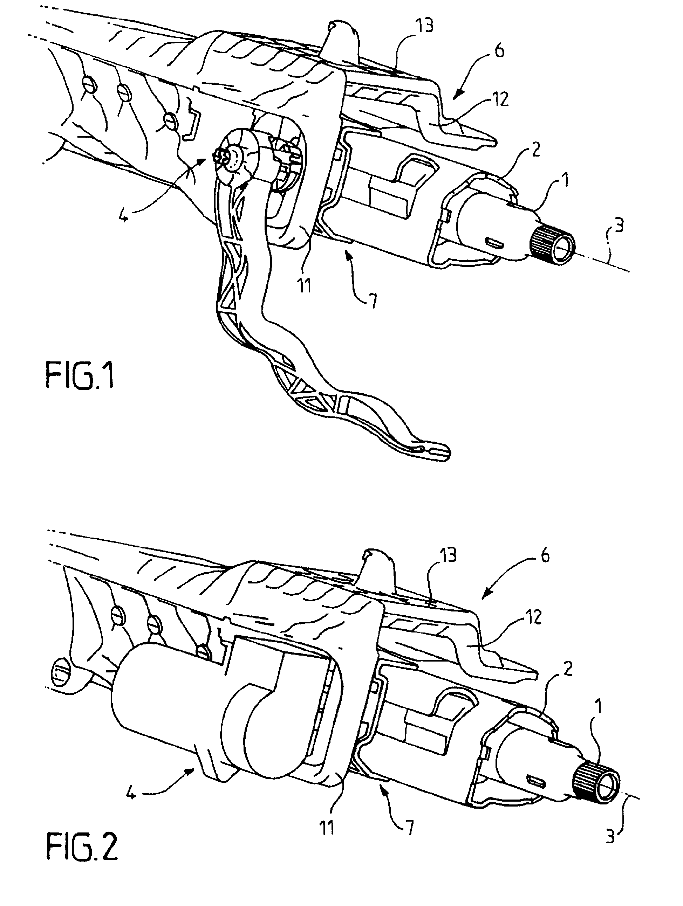

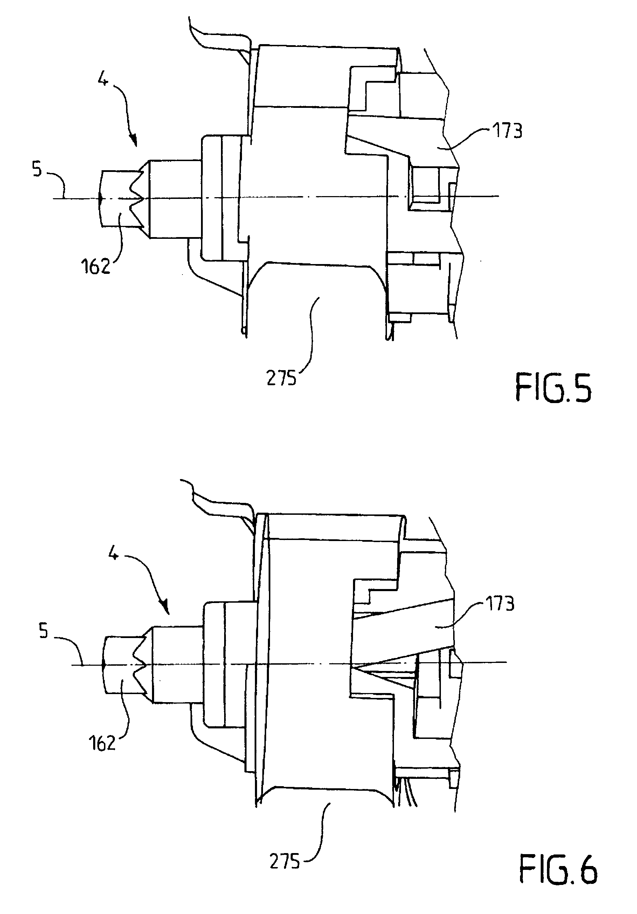

Un premier mode de réalisation du système de serrage 4 est représenté sur les figures 1 et 3 à 6, et comporte une tige de serrage 160 dont l'axe est l'axe de serrage 4.

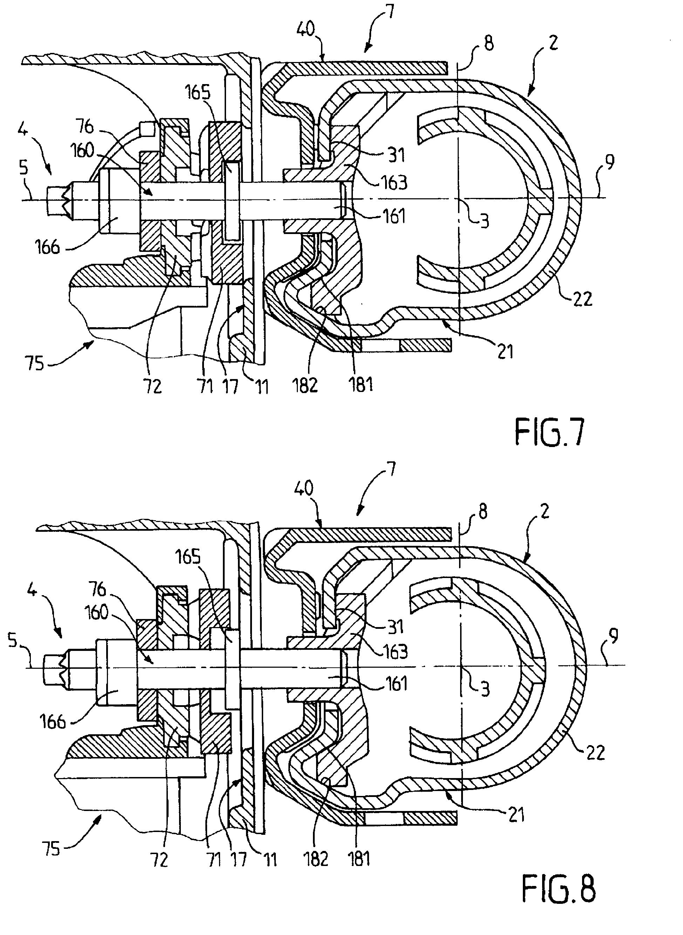

Un deuxième mode de réalisation du système de serrage 4 est représenté sur les figures 7 et 8, et comporte une tige de serrage 160 dont l'axe est l'axe de serrage 4.

Un troisième mode de réalisation du système de serrage 4 est représenté sur les figures 2, 9 et 10.

Dans ces trois modes de réalisation, tous les autres éléments du système de serrage 4 sont montés sur et traversés par la tige de serrage 160 correspondante, qui traverse également le tube-corps 2 par le trou oblong de passage 28, l'élément d'appui 40 par le trou de passage 49, et le montant latéral 11 par le trou oblong de passage 19.

Les autres éléments du système de serrage 4 consistent en :
- un ensemble de blocage 70, qui est disposé contre la face externe 17 du montant latéral 11 ;
- un système de manoeuvre 75 entraînant en rotation l'ensemble de blocage 70 par rapport à l'axe de serrage 5 ;
- une butée à aiguilles 76 disposée contre la face externe du système de manoeuvre 75 ;
- une équerre de serrage ayant un trou fileté pour se monter sur l'extrémité interne filetée 161 de la tige de serrage 160 afin de constituer une tête de serrage 163, qui vient s'appliquer contre les faces internes 29 et 30 du tube-corps 2;
- un élément de serrage 166, qui est aménagé à l'extrémité externe de la tige de serrage 160 de manière à bloquer, dans le sens de l'axe de serrage 5, le tube-corps 2 sur le montant latéral 11 par l'intermédiaire de l'élément d'appui 40, lorsque le système de serrage 4 est en position verrouillée.

Comme cela est représenté sur les figures 3, 4, 7 à 10, l'équerre de serrage constituant la tête de serrage 163, comporte deux faces inclinées 181 et 182, qui sont orientées de manière à venir s'appliquer respectivement contre les faces internes 29 et 30 des portions inclinées correspondantes 23 et 24 du tube-corps 2.

De plus l'équerre de serrage constituant la tête de serrage 163, vient s'appliquer contre la face interne 31 de la portion de raccordement 27 de l'autre côté des faces internes 29 et 30 par rapport au plan de serrage 9.

Dans un premier mode de réalisation, l'ensemble de blocage 70 comprend un plateau fixe 171, un plateau mobile 172 et des aiguilles à bouts sphériques 173 disposées entre les deux plateaux et s'appuyant sur les deux plateaux 171, 172. Le plateau fixe 171 s'applique contre la face externe 17 du montant latéral 11, et est fixe en rotation par rapport à l'axe de serrage 5. Le plateau mobile 172 est solidaire du système de manoeuvre 75, et est mobile en rotation par rapport à l'axe de serrage 5.

Dans un deuxième et un troisième mode de réalisation, l'ensemble de blocage 70 comprend une came fixe 71 et une came mobile 72. La came fixe 71 s'applique contre la face externe 17 du montant latéral 11, et est fixe en rotation par rapport à l'axe de serrage 5. La came mobile 72 est solidaire du système de manoeuvre 75, et est mobile en rotation par rapport à l'axe de serrage 5.

Dans les trois modes de réalisation, le système de manoeuvre 75 peut être un levier manuel 275, comme cela est représenté sur les figures 1, 3 à 8. Dans les trois modes de réalisation, le système de manoeuvre 75 peut être aussi constitué par une commande électrique comme cela est représenté sur les figures 2, 9 et 10, ladite commande électrique comprenant un système à roue 176 et vi sans fin 177 qui est entraîné par un moteur électrique 178, ladite roue 176 est montée sur un moyeu 179 avec lequel elle est solidaire, le moyeu 179 appartenant à la came mobile 72 ou au plateau mobile 172.

Pour être réalisé, le système de réglage du jeu de coulissement coopère avec la face externe 17 du montant 11; et il est disposé et agencé sur la tige de serrage 160.

Le système de réglage du jeu de coulissement comprend un élément d'appui de réglage 165, monté et intégré sur la tige de serrage 160, ledit élément d'appui de réglage 165 étant manoeuvrable afin d'ajuster sa position axiale par rapport à la face externe 17 du montant 11, de manière qu'en position déverrouillée du système de serrage, il y ait le jeu demandé entre chacune des deux faces internes d'appui 47, 48 de l'élément d'appui 40 et la face externe de contact 33, 34 correspondante du tube-corps 2.

Dans le mode de réalisation du système de serrage 4 représenté sur les figures, la tige de serrage 160 a une extrémité interne filetée 161, une extrémité externe filetée 162, et une partie centrale avec un élément d'appui de réglage 165 intégré, constitué par un anneau de positionnement. L'extrémité interne filetée 161 reçoit un écrou de serrage constituant la tête de serrage 163, dont les faces inclinées 181 et 182 coopèrent avec les faces internes 29 et 30 du tube-corps 2, pour permettre le blocage en position verrouillée. Le système de réglage du jeu de coulissement comprend l'élément d'appui de réglage 165 constituant l'anneau de positionnement et une forme de manoeuvre 167 agencée au bout de ladite extrémité externe filetée 162.

La forme 167 permet de tourner la tige de serrage 160, afin de régler la distance entre la tête de serrage 163 constituée par l'écrou de serrage et l'élément d'appui de réglage 165 constitué par l'anneau de positionnement, dont la face interne 164 vient buter contre la face externe 17 du montant 11 lorsque le système de serrage 4 est en position déverrouillée avec le jeu de coulissement demandé entre les faces externes de contact 33, 34 et les faces internes d'appui 47, 48.

L'élément de serrage est constitué par un écrou de serrage 166, qui se déplace sur la portion externe filetée 162 pour se bloquer contre la butée à aiguilles 76, lorsque le système de serrage est en position verrouillée.

De plus, un ressort peut être disposé entre l'élément d'appui de réglage 165 constitué par l'anneau de positionnement et la face interne de l'ensemble de blocage 70 et/ou la face externe du montant 11 afin de supprimer totalement le jeu de fonctionnement lors du coulissement avec un effort de réglage en position contrôlé.

Ainsi le tube-corps 2 est lié au montant latéral 11 par un mécanisme latéral 7, qui permet deux positions de fonctionnement : la position verrouillée et la position déverrouillée. La position verrouillée permet d'obtenir une liaison de type encastrement entre le montant latéral 11 et le tube-corps 2. La position déverrouillée permet d'obtenir un jeu maîtrisé entre le montant latéral 11 et le tube-corps 2. Ce jeu maîtrisé autorise le mouvement vertical et axial du tube-corps par rapport au montant latéral 11 en évitant tout basculement apparent du volant de direction. Ce jeu est réglé en utilisant la partie filetée 161 de la tige de serrage 160 du système de serrage 4.

Pour obtenir la position verrouillée, le verrouillage est réalisé par la rotation de la came mobile 72 ou du plateau mobile 172 par rapport à la came fixe 71, ou au plateau fixe 171 qui génère un mouvement axial positif de la tige de serrage 160 Dans cette position, l'ensemble de blocage 70, l'écrou de serrage 166, la tige de serrage 160, le montant latéral 11, l'élément d'appui 40, le tube-corps 2, la tête de serrage 163 sont en contrainte suivant l'axe de serrage 5. Dans cette position, le mouvement du tube-corps 2 par rapport au montant latéral 11, sous un effort compatible avec les contraintes liées à ce type de produit, n'est pas possible. Dans cette position, il existe un jeu entre la face interne 164 de l'élément d'appui de réglage 165 constitué par l'anneau de positionnement et la face externe 17 du montant 11 ; et il existe un jeu entre la face externe 169 dudit anneau de positionnement 165 et le fond 175 du logement 174.

Pour obtenir la position déverrouillée, le déverrouillage est réalisé par la rotation de la came mobile 72 ou du plateau mobile 172 par rapport à la came fixe 71 ou au plateau fixe 171, , qui génère un mouvement axial négatif de la tige de serrage ou 160. Dans cette position, l'ensemble de blocage 70, l'écrou de serrage 166, la tige de serrage 160, le montant latéral 11, l'élément d'appui 40, le tube-corps 2, l'équerre de serrage 180 ne sont plus en contrainte suivant l'axe de serrage 5. Les faces de glissement du montant latéral 11 et du tube-corps 2 permettent alors d'autoriser un mouvement relatif vertical et axial de ces deux pièces. Dans cette position, le jeu entre l'élément d'appui de réglage 165 constitué par l'anneau de positionnement et la place externe 17 du montant 11 est rattrapé. L' élément d'appui de réglage 165 constitué par l'anneau de positionnement constitue alors la butée, suivant l'axe de serrage 5, du tube-corps 2, de l'élément d'appui 40, de l'équerre de serrage 180, de la tige de serrage 160 et du montant 11. L'ajustement de la position de l'anneau de positionnement permet de libérer les contraintes de la liaison tube-corps 2/montant latéral 11 sans induire de rotation, c'est-à-dire de basculement relatif de ces éléments.

## Revendications

1. Dispositif d'ajustement de position d'une colonne de direction de véhicule automobile, ladite colonne de direction étant constituée par un arbre de direction (1) monté tournant autour d'un axe de direction (3) dans un tube-corps (2), ledit tube-corps (2) étant relié à un ensemble support (6) fixé à la structure du véhicule, ladite colonne de direction étant réglable en hauteur et/ou en profondeur, avec un système de serrage (4) suivant un axe de serrage (5), qui est sensiblement perpendiculaire au plan vertical (8) passant par l'axe de direction (3) ;
- l'ensemble des liaisons entre ledit tube-corps (2) et l'ensemble support (6) est constitué par un mécanisme latéral (7) par rapport au plan vertical (8) de l'axe de direction (3) ;
- ledit mécanisme latéral (7) est monté sur un montant latéral (11) de l'ensemble support ;
- ledit mécanisme latéral (7) comprend :
. un système anti-rotation suivant l'axe de serrage (4),
. un système anti-rotation suivant l'axe de direction (3),
. lesdits deux systèmes anti-rotation permettant d'obtenir une liaison de type encastrement entre le tube-corps (2) et le montant latéral (11) de l'ensemble support (6), lorsque le système de serrage (4) est en position verrouillée,
. un système de réglage du jeu de coulissement suivant l'axe de direction (3) entre le mécanisme latéral (7) et le tube-corps (2) de manière à éviter tout basculement apparent, lorsque le système de serrage (4) est en position déverrouillée,
. un système de réglage de la valeur du serrage lorsque le système de serrage (4) est en position verrouillée,
. lesdits systèmes de réglage du jeu de coulissement et du serrage étant intégrés audit système de serrage (4),
. ledit système de réglage du jeu étant constitué au moyen d'un seul élément d'appui de réglage (165) et d'une tête de serrage (163), qui sont montés directement sur une tige de serrage (160) d'axe (5), la tête de serrage (163) étant disposée à l'intérieur du tube-corps (2), la tête de serrage (163) étant réglable axialement par rapport à la tige de serrage (160), afin d'ajuster la distance axiale entre l'élément d'appui de réglage (165) et la tête de serrage (163) pour obtenir le jeu de coulissement désiré,
. ledit système de réglage du jeu étant commandé par la tige de serrage (160) du système de serrage (4), c'est-à-dire en agissant sur la tête de serrage (163) par l'intermédiaire de l'extrémité externe de la tige de serrage (160) du côté de la face externe (17), de manière à avoir un réglage du jeu en position déverrouillée, qui soit complètement indépendant du réglage du serrage en position verrouillée effectué à l'aide d'un élément de serrage (166), **caractérisé en ce que** l'élément d'appui de réglage (165) étant disposé dans un logement interne (174) d'une came fixe (71) ou d'un plateau fixe (171) d'un ensemble de blocage (70), qui s'applique contre la face externe (17) du montant latéral (11), le fond (175) du logement interne (174) étant disposé en face de la face externe (17).

2. Dispositif d'ajustement selon la revendication 1, **caractérisé en ce que** le système anti-rotation suivant l'axe de serrage (5) et le système anti-rotation suivant l'axe de direction (3) sont un seul et même système anti-rotation qui consiste en un élément d'appui (40) coopérant avec le tube-corps (2), ledit élément d'appui (40) ayant un profil transversal par rapport à l'axe de direction (3) qui coopère avec un profil conjugué qui est aménagé sur ledit tube-corps (2), l'élément d'appui (40) étant disposé entre le tube-corps (2) et le montant latéral (11), et l'élément d'appui (40) étant relié audit montant latéral (11).

3. Dispositif d'ajustement selon la revendication 2, **caractérisé en ce que** l'élément d'appui (40) comporte deux faces internes d'appui (47, 48) qui sont inclinées l'une par rapport à l'autre, qui sont parallèles à l'axe de direction (3), et qui sont disposées d'un côté du plan de serrage (9) passant l'axe de serrage (5) et l'axe de direction (3) et perpendiculaire au plan vertical (8) de l'axe de direction (3) ; lesdites faces internes d'appui (47, 48) coopérant respectivement avec deux faces externes de contact (33, 34) ayant un profil conjugué, qui sont aménagées sur le tube-corps (2), lesdites faces externes de contact (33, 34) ayant la même inclinaison par rapport au plan vertical (8) de l'axe de direction (3) que lesdites faces internes d'appui (47, 48), et étant parallèles audit axe de direction (3).

4. Dispositif d'ajustement selon l'une quelconque des revendications 2 et 3, **caractérisé en ce que** le système de serrage (4) comprend :
- la tige de serrage (160) dont l'axe est l'axe de serrage (5), tous les autres éléments du système de serrage (4) sont montés sur ladite tige de serrage (160) qui traverse le tube-corps (2), l'élément d'appui (40), le montant latéral (11) ainsi que tous les autres éléments ;
- l'ensemble de blocage (70), qui est disposé contre la face externe (17) du montant latéral (11) ;
- un système de manoeuvre (75) entraînant en rotation l'ensemble de blocage (70) par rapport à l'axe de serrage (5);
- une équerre de serrage ayant un trou fileté pour se monter sur l'extrémité interne filetée (161) de la tige de serrage (160) afin de constituer la tête de serrage (163), qui vient s'appliquer contre les faces internes (29) et (30)du tube-corps (2),
- un élément de serrage (166), qui est aménagé à l'extrémité externe (162) de la tige de serrage (160) de manière à bloquer, dans le sens de l'axe de serrage (5), le tube-corps (2) sur le montant latéral (11), lorsque le système de serrage (4) est en position verrouillée.

5. Dispositif d'ajustement selon la revendication 4, **caractérisé en ce que** :
- l'ensemble de blocage (70) comprend un plateau fixe (171) en rotation par rapport à l'axe de serrage (5), un plateau mobile (172) en rotation par rapport à l'axe de serrage (5) solidaire du système de manoeuvre (75) ; et des aiguilles à bouts sphériques (173) s'appuyant entre et contre les plateaux fixe (171) et mobile (172),
de manière qu'en position déverrouillée du système de serrage (4) il y ait le jeu demandé entre chacune des deux faces internes d'appui (47, 48) de l'élément d'appui (40) et la face externe de contact (33, 34) correspondante du tube-corps (2).

6. Dispositif d'ajustement selon la revendication 4, **caractérisé en ce que** :
- l'ensemble de blocage (70) comprend une came fixe (71) en rotation par rapport à l'axe de serrage (5), et une came mobile (72) en rotation par rapport à l'axe de serrage (5) et solidaire du système de manoeuvre (75) ;
- de manière qu'en position déverrouillée du système de serrage (4), il y ait le jeu demandé entre chacune des deux faces internes d'appui (47, 48) de l'élément d'appui (40) et la face externe de contact (33, 34) correspondante du tube-corps (2).

7. Dispositif d'ajustement selon l'une des revendications 5 et 6, **caractérisé en ce que** le système de manoeuvre (75) est constitué par un levier manuel (275).

8. Dispositif d'ajustement selon l'une des revendications 5 et 6, **caractérisé en ce que** le système de manoeuvre (75) est constitué par une commande électrique comprenant un système à roue (176) et vis sans fin (177) entrant par un moteur électrique (178).

9. Dispositif d'ajustement selon l'une des revendications 5 et 6 **caractérisé en ce que** :
- le tube-corps (2) comporte un élément latéral (21) comportant deux portions inclinées (23, 24) qui sont reliées à une portion de raccordement (27) sensiblement verticale, chaque portion inclinée (23, 24) comporte une face externe (33, 34) qui est la face de contact correspondante, et la portion de raccordement (27) est munie d'un trou oblong de passage (28) de la tige de serrage (160), qui est parallèle à l'axe de direction (3) ;
- l'élément d'appui (40) comporte deux portions d'appui (41) sensiblement verticales qui s'appliquent contre le montant latéral (11) avec une portion de raccordement verticale (45) ayant deux portions inclinées (43, 44) qui comporte une face interne (47, 48) qui est la face d'appui correspondante, ladite portion de raccordement (45) ayant un trou de passage (49) de la tige de serrage (160);
- le montant latéral (11) comporte un trou oblong de passage (19) de la tige de serrage, qui est sensiblement perpendiculaire au plan de serrage (9) ;
- l'équerre de serrage constituant la tête de serrage (163) possède deux faces inclinées (181, 182) qui s'appliquent contre les faces internes (29, 30) des portions inclinées (23, 24) correspondantes du tube-corps (2) ;
- afin de permettre le blocage en position verrouillée.

10. Dispositif d'ajustement selon la revendication 9, **caractérisé en ce que** :
- la tige de serrage (160) comporte un anneau intégré qui constitue l'élément d'appui de réglage (165);
- la tige de serrage (160) a une extrémité interne filetée (161) qui s'engage dans un trou fileté de l'équerre de serrage constituant la tête de serrage (163) ;
- la tige de serrage (160) a une extrémité externe filetée (162) avec une forme de manoeuvre (167) agencée au bout de ladite extrémité (162), ladite forme (167) permettant le réglage de la tête de serrage ou écrou (163) par rapport audit élément d'appui de réglage (165) en position déverrouillée,
- l'extrémité externe filetée (162) reçoit l'élément de serrage qui est constitué par un écrou de serrage (166) bloqué en position verrouillée.

## Claims

1. Device for adjusting the position of a steering column of a motor vehicle, said steering column being made up of a steering shaft (1) rotatably mounted about a steering axis (3) in a tube body (2), said tube body (2) being connected to a bearing assembly (6) fixed to the structure of the vehicle, said steering column being adjustable in height and/or in depth, with a clamping system (4) along a clamping axis (5) which is substantially perpendicular to the vertical plane (8) passing through the steering axis (3);
- the assembly of the links between said tube body (2) and the bearing assembly (6) being made up of a mechanism (7) which is lateral with respect to the vertical plane (8) of the steering axis (3);
- said lateral mechanism (7) being mounted on a side post (11) of the bearing assembly;
- said lateral mechanism (7) comprising:
· an anti-rotation system along the clamping axis (4),
· an anti-rotation system along the steering axis (3),
· said two anti-rotation systems making it possible to obtain a link of the embedded type between the tube body (2) and the side post (11) of the bearing assembly (6), when the clamping system (4) is in the locked position,
· a sliding clearance adjusting system along the steering axis (3) between the lateral mechanism (7) and the tube body (2) so as to avoid any apparent tipping, when the clamping system (4) is in the unlocked position,
· a system for adjusting the clamping value when the clamping system (4) is in the locked position,
· said systems for adjusting the sliding clearance and the clamping being integrated into said clamping system (4),
· said clearance adjusting system being made up of a single adjustment bearing member (165) and a clamping head (163), which are mounted directly on a clamping rod (160) with an axis (5), the clamping head (163) being arranged inside the tube body (2), the clamping head (163) being axially adjustable with respect to the clamping rod (160), so as to adjust the axial distance between the adjustment bearing member (165) and the clamping head (163) so as to obtain the desired sliding clearance,
· said clearance adjusting system being controlled by the clamping rod (160) of the clamping system (4), that is, acting on the clamping head (163) by means of the external end of the clamping rod (160) on the side of the external face (17), so as to have a clearance adjustment in the unlocked position which is completely independent of the clamping adjustment in the locked position carried out by means of a clamping member (166), **characterised in that** the adjustment bearing member (165) is arranged in an internal housing (174) of a fixed cam (71) or of a fixed plate (171) of a locking assembly (70) which is applied to the external face (17) of the side post (11), the base (175) of the internal housing (174) being arranged opposite the external face (17).

2. Adjustment device according to claim 1, **characterised in that** the anti-rotation system along the clamping axis (5) and the anti-rotation system along the steering axis (3) are one and the same anti-rotation system consisting of a bearing member (40) cooperating with the tube body (2), said bearing member (40) having a transverse profile with respect to the steering axis (3) which cooperates with a conjugate profile provided on said tube body (2), the bearing member (40) being arranged between the tube body (2) and the side post (11), and the bearing member (40) being connected to said side post (11).

3. Adjustment device according to claim 2, **characterised in that** the bearing member (40) comprises two internal bearing faces (47, 48) which are tilted with respect to one another, which are parallel to the steering axis (3), and which are arranged on one side of the clamping plane (9) passing through the clamping axis (5) and the steering axis (3) and perpendicular to the vertical plane (8) of the steering axis (3); said internal bearing faces (47, 48) cooperating respectively with two external contact faces (33, 34) having a conjugate profile which are provided on the tube body (2), said external contact faces (33, 34) having the same pitch with respect to the vertical plane (8) of the steering axis (3) as said internal bearing faces (47, 48), and being parallel to said steering axis (3).

4. Adjustment device according to either claim 2 or claim 3, **characterised in that** the clamping system (4) comprises:
- the clamping rod (160), the axis of which is the clamping axis (5), all the other members of the clamping system (4) being mounted on said clamping rod (160) which crosses the tube body (2), the bearing member (40), the side post (11) and all the other members;
- the locking assembly (70), which is arranged against the external face (17) of the side post (11);
- an operating system (75) which drives the locking assembly (70) in rotation with respect to the clamping axis (5);
- a clamping bracket having a threaded hole for being mounted on the internal threaded end (161) of the clamping rod (160) in order to make up the clamping head (163) which is applied to the internal faces (29) and (30) of the tube body (2);
- a clamping member (166), which is provided at the external end (162) of the clamping rod (160) so as to lock, in the direction of the clamping axis (5), the tube body (2) on the side post (11), when the clamping system (4) is in the locked position.

5. Adjustment device according to claim 4, **characterised in that**:
- the locking assembly (70) comprises a plate (171) which is fixed in rotation with respect to the clamping axis (5), a plate (172) which is movable in rotation with respect to the clamping axis (5) and integral with the operating system (75); and spherical-ended needles (173) bearing between and against the fixed (171) and movable (172) plates,
in such a way that, in the unlocked position of the clamping system (4), there is the desired clearance between each of the two internal bearing faces (47, 48) of the bearing member (40) and the corresponding external contact face (33, 34) of the tube body (2).

6. Adjustment device according to claim 4, **characterised in that**:
- the locking assembly (70) comprises a cam (71) which is fixed in rotation with respect to the clamping axis (5), and a cam (72) which is movable in rotation with respect to the clamping axis (5) and integral with the operating system (75);
- in such a way that, in the unlocked position of the clamping system (4), there is the desired clearance between each of the two internal bearing faces (47, 48) of the bearing member (40) and the corresponding external contact face (33, 34) of the tube body (2).

7. Adjustment device according to either claim 5 or claim 6, **characterised in that** the operating system (75) is made up of a manual lever (275).

8. Adjustment device according to either claim 5 or claim 6, **characterised in that** the operating system (75) is made up of an electric control comprising a wheel system (176) and an endless screw (177) driven by an electric motor (178).

9. Adjustment device according to either claim 5 or claim 6, **characterised in that**:
- the tube body (2) comprises a side member (21) comprising two tilted portions (23, 24) which are connected to a substantially vertical connecting portion (27), each tilted portion (23, 24) comprises an external face (33, 34) which is the corresponding contact face, and the connecting portion (27) is provided with an oblong hole (28), through which the clamping rod (160) passes, which is parallel to the steering axis (3);
- the bearing member (40) comprises two substantially vertical bearing portions (41) which are applied to the side post (11) with a vertical connecting portion (45) having two tilted portions (43, 44) which comprises an internal face (47, 48) which is the corresponding bearing face, said connecting portion (45) having a hole (49) through which the clamping rod (160) passes;
- the side post (11) comprises an oblong hole (19), through which the clamping rod (160) passes, which is substantially perpendicular to the clamping plane (9);
- the clamping bracket making up the clamping head (163) has two tilted faces (181, 182) which are applied to the internal faces (29, 30) of the corresponding tilted portions (23, 24) of the tube body (2);
- so as to enable locking in the locked position.

10. Adjustment device according to claim 9, **characterised in that**:
- the clamping rod (160) comprises an integrated ring which makes up the adjustment bearing member (165);
- the clamping rod (160) has an internal threaded end (161) which engages in a threaded hole of the clamping bracket making up the clamping head (163);
- the clamping rod (160) has an external threaded end (162) with an operating shape (167) arranged at the end of said end (162), said shape (167) enabling the adjustment of the clamping head or nut (163) with respect to said adjustment bearing member (165) in the unlocked position,
- the external threaded end (162) receives the clamping member which consists of a clamping nut (166) locked in the locked position.

## Patentansprüche

1. Vorrichtung zum Justieren der Position einer Lenksäule eines Kraftfahrzeugs, wobei die Lenksäule von einer Lenkwelle (1) gebildet wird, die drehend um eine Lenkachse (3) in einem Mantelrohr (2) befestigt ist, wobei das Mantelrohr (2) mit einer Trageinheit (6) verbunden ist, die am Aufbau des Fahrzeugs fixiert ist, wobei die Lenksäule höhen- und/oder tiefenverstellbar ist, mit einem Spannsystem (4) gemäß einer Spannachse (5), die im Wesentlichen senkrecht zur vertikalen Ebene (8) verläuft, die durch die Lenkachse (3) führt;
- wobei die Verbindungseinheit zwischen dem Mantelrohr (2) und der Trageinheit (6) von einem seitlichen Mechanismus (7) in Bezug auf die vertikale Ebene (8) der Lenkachse (3) gebildet wird;
- wobei der seitliche Mechanismus (7) auf einer seitlichen Stütze (11) der Trageinheit befestigt ist;
- wobei der seitliche Mechanismus (7) Folgendes umfasst:
. ein Verdrehsicherungssystem gemäß der Spannachse (4),
. ein Verdrehsicherungssystem gemäß der Lenkachse (3),
. wobei es die zwei Verdrehsicherungssysteme ermöglichen, eine Verbindung in der Art einer Einpassung zwischen dem Mantelrohr (2) und der seitlichen Stütze (11) der Trageinheit (6) zu erhalten, wenn sich das Spannsystem (4) in verriegelter Position befindet,
. ein System zum Einstellen des Gleitspiels gemäß der Lenkachse (3) zwischen dem seitlichen Mechanismus (7) und dem Mantelrohr (2), um jegliches sichtbare Kippen zu vermeiden, wenn sich das Spannsystem (4) in entriegelter Position befindet,
. ein System zum Einstellen des Spannwertes, wenn sich das Spannsystem (4) in verriegelter Position befindet,
. wobei die Systeme zum Einstellen des Gleitspiels und der Spannung im Spannsystem (4) integriert sind,
. wobei das System zum Einstellen des Spiels mittels eines einzelnen Einstellauflageelements (165) und eines Spannkopfs (163) gebildet wird, die direkt auf einem Spannbolzen (160) der Achse (5) befestigt sind, wobei der Spannkopf (163) im Inneren des Mantelrohrs (2) angeordnet ist, wobei der Spannkopf (163) axial in Bezug auf den Spannbolzen (160) verstellbar ist, um den axialen Abstand zwischen dem Einstellauflageelement (165) und dem Spannkopf (163) zu justieren, um das gewünschte Gleitspiel zu erhalten,
. wobei das System zum Einstellen des Spiels über den Spannbolzen (160) des Spannsystems (4) betätigt wird, das heißt, durch Einwirken auf den Spannkopf (163) mittels des äußeren Endes des Spannbolzens (160) auf Seite der Außenfläche (17), um eine Einstellung des Spiels in entriegelter Position zu erlangen, die völlig unabhängig von der Einstellung der Spannung in verriegelter Position ist, die mithilfe eines Spannelements (166) erfolgt, **dadurch gekennzeichnet, dass** das Einstellauflageelement (165) in einer inneren Aufnahme (174) einer ortsfesten Steuerkurve (71) oder einer ortsfesten Platte (171) einer Blockiereinheit (70) angeordnet ist, die gegen die Außenfläche (17) der seitlichen Stütze (11) drückt, wobei der Boden (175) der inneren Aufnahme (174) gegenüber der Außenfläche (17) angeordnet ist.

2. Justiervorrichtung nach Anspruch 1, **dadurch gekennzeichnet, dass** das Verdrehsicherungssystem gemäß der Spannachse (5) und das Verdrehsicherungssystem gemäß der Lenkachse (3) ein und dasselbe Verdrehsicherungssystem sind, das aus einem Auflageelement (40) besteht, das mit dem Mantelrohr (2) zusammenwirkt, wobei das Auflageelement (40) ein in Bezug auf die Lenkachse (3) quer verlaufendes Profil aufweist, das mit einem zugehörigen Profil zusammenwirkt, das auf dem Mantelrohr (2) ausgeführt ist, wobei das Auflageelement (40) zwischen dem Mantelrohr (2) und der seitlichen Stütze (11) angeordnet ist, und wobei das Auflageelement (40) mit der seitlichen Stütze (11) verbunden ist.

3. Justiervorrichtung nach Anspruch 2, **dadurch gekennzeichnet, dass** das Auflageelement (40) zwei Auflageinnenflächen (47, 48) umfasst, die zueinander geneigt sind, die parallel zur Lenkachse (3) verlaufen, und die auf einer Seite der Spannebene (9) angeordnet sind, die durch die Spannachse (5) und die Lenkachse (3) führt und senkrecht zur vertikalen Ebene (8) der Lenkachse (3) verläuft; wobei die Auflageinnenflächen (47, 48) jeweils mit zwei Kontaktaußenflächen (33, 34) mit einem zugehörigen Profil zusammenwirken, die auf dem Mantelrohr (2) ausgeführt sind, wobei die Kontaktaußenflächen (33, 34) die gleiche Neigung in Bezug auf die vertikale Ebene (8) der Lenkachse (3) aufweisen wie die Auflageinnenflächen (47, 48) und parallel zur Lenkachse (3) verlaufen.

4. Justiervorrichtung nach einem der Ansprüche 2 und 3, **dadurch gekennzeichnet, dass** das Spannsystem (4) Folgendes umfasst:
- den Spannbolzen (160), dessen Achse die Spannachse (5) ist, wobei alle übrigen Elemente des Spannsystems (4) auf dem Spannbolzen (160) befestigt sind, der durch das Mantelrohr (2), das Auflageelement (40), die seitliche Stütze (11) sowie alle übrigen Elemente verläuft;
- die Blockiereinheit (70), die gegen die Außenfläche (17) der seitlichen Stütze (11) angeordnet ist;
- ein Betätigungssystem (75), das die Blockiereinheit (70) in Bezug auf die Spannachse (5) in Drehung versetzt;
- einen Spannwinkel mit einem Gewindeloch, um auf dem mit einem Gewinde ausgestatteten Innenende (161) des Spannbolzens (160) befestigt zu werden, um den Spannkopf (163) zu bilden, der gegen die Innenflächen (29) und (30) des Mantelrohrs (2) drückt;
- ein Spannelement (166), das am Außenende (162) des Spannbolzens (160) ausgeführt ist, um das Mantelrohr (2) an der seitlichen Stütze (11) in Richtung der Spannachse (5) zu blockieren, wenn sich das Spannsystem (4) in verriegelter Position befindet.

5. Justiervorrichtung nach Anspruch 4, **dadurch gekennzeichnet, dass**:
- die Blockiereinheit (70) eine in Bezug auf die Spannachse (5) drehfeste Platte (171), eine in Bezug auf die Spannachse (5) drehbare und mit dem Betätigungssystem (75) fest verbundene Platte (172), und Nadeln mit Kugelenden (173) umfasst, die zwischen und gegen die drehfeste (171) und drehbare (172) Platte drücken,
sodass in entriegelter Position des Spannsystems (4) das gewünschte Spiel zwischen jeder der zwei Auflageinnenflächen (47, 48) des Auflageelements (40) und der entsprechenden Kontaktaußenfläche (33, 34) des Mantelrohrs (2) vorhanden ist.

6. Justiervorrichtung nach Anspruch 4, **dadurch gekennzeichnet, dass**:
- die Blockiereinheit (70) eine in Bezug auf die Spannachse (5) drehfeste Steuerkurve (71) und eine in Bezug auf die Spannachse (5) drehbare und mit dem Betätigungssystem (75) fest verbundene Steuerkurve (72) umfasst;
- sodass in entriegelter Position des Spannsystems (4) das gewünschte Spiel zwischen jeder der zwei Auflageinnenflächen (47, 48) des Auflageelements (40) und der entsprechenden Kontaktaußenfläche (33, 34) des Mantelrohrs (2) vorhanden ist.

7. Justiervorrichtung nach einem der Ansprüche 5 und 6, **dadurch gekennzeichnet, dass** das Betätigungssystem (75) von einem manuellen Hebel (275) gebildet wird.

8. Justiervorrichtung nach einem der Ansprüche 5 und 6, **dadurch gekennzeichnet, dass** das Betätigungssystem (75) von einer elektrischen Steuerung gebildet wird, die ein System mit einem Rad (176) und einer Endlosschnecke (177) umfasst, das von einem Elektromotor (178) angetrieben wird.

9. Justiervorrichtung nach einem der Ansprüche 5 und 6, **dadurch gekennzeichnet, dass**:
- das Mantelrohr (2) ein seitliches Element (21) umfasst, das zwei geneigte Abschnitte (23, 24) umfasst, die mit einem im Wesentlichen vertikalen Verbindungsabschnitt (27) verbunden sind, wobei jeder geneigte Abschnitt (23, 24) eine Außenfläche (33, 34) umfasst, die die entsprechende Kontaktfläche ist, und wobei der Verbindungsabschnitt (27) mit einem Langloch (28) für den Durchgang des Spannbolzens (160) ausgestattet ist, das parallel zur Lenkachse (3) verläuft;
- das Auflageelement (40) zwei im Wesentlichen vertikale Auflageabschnitte (41) umfasst, die gegen die seitliche Stütze (11) drücken, mit einem vertikalen Verbindungsabschnitt (45) und zwei geneigten Abschnitten (43, 44), die eine Innenfläche (47, 48) aufweisen, die die entsprechende Auflagefläche bildet, wobei der Verbindungsabschnitt (45) ein Loch (49) für den Durchgang des Spannbolzens (160) umfasst;
- die seitliche Stütze (11) ein Langloch (19) für den Durchgang des Spannbolzens umfasst, das im Wesentlichen senkrecht zur Spannebene (9) verläuft;
- der Spannwinkel, der den Spannkopf (163) bildet, zwei geneigte Flächen (181, 182) aufweist, die gegen die Innenflächen (29, 30) der entsprechenden geneigten Abschnitte (23, 24) des Mantelrohrs (2) drücken;
- um die Blockierung in verriegelter Position zu ermöglichen.

10. Justiervorrichtung nach Anspruch 9, **dadurch gekennzeichnet, dass**:
- der Spannbolzen (160) einen integrierten Ring umfasst, der das Einstellauflageelement (165) bildet;
- der Spannbolzen (160) ein mit einem Gewinde ausgestattetes Innenende (161) aufweist, das in ein Gewindeloch des Spannwinkels, der den Spannkopf (163) bildet, eingreift;
- der Spannbolzen (160) ein mit einem Gewinde ausgestattetes Außenende (162) mit einer Betätigungsform (167) aufweist, die am Ende des Außenendes (162) angeordnet ist, wobei die Form (167) das Einstellen des Spannkopfes oder der Mutter (163) in Bezug auf das Einstellauflageelement (165) in entriegelter Position ermöglicht,
- das mit einem Gewinde ausgestattete Außenende (162) das Spannelement aufnimmt, das von einer Spannmutter (166) gebildet wird, die in verriegelter Position blockiert ist.
